# EUROPÄISCHE PATENTSCHRIFT

(11) **EP 1 524 160 B1**
(45) Veröffentlichungstag und Bekanntmachung des Hinweises auf die Patenterteilung: **22.11.2006**
(21) Anmeldenummer: 04023389.2
(22) Anmeldetag: 01.10.2004
(51) Int. Cl.: B60R 22/46

(54) **Gurtaufroller für einen Fahrzeug-Sicherheitsgurt**
Retractor for a vehicle safety belt
Enrouleur pour la ceinture de sécurité d'un véhicule

(30) Priorität: 15.10.2003 DE 10347992
(43) Veröffentlichungstag der Anmeldung: 20.04.2005
(73) Patentinhaber: TRW Automotive GmbH, 73553 Alfdorf (DE)
(72) Erfinder: Prokscha, Martin, 73527 Schwäbisch Gmünd (DE); Holbein, Wolfgang, 73553 Alfdorf (DE)
(74) Vertreter: Sties, Jochen

(56) Entgegenhaltungen:
- EP-A- 1 172 268
- EP-A- 1 382 498
- DE-C- 10 059 227
- DE-U- 20 115 316

## Beschreibung

Die Erfindung betrifft einen Gurtaufroller für einen Fahrzeugsicherheitsgurt, mit einem Rahmen, einem Gurtspulen-Antriebsteil, das drehbar am Rahmen angeordnet ist und mit einer Gurtspule verbunden sein kann, wobei das Gurtspulen-Antriebsteil mit einer Außenverzahnung versehen ist, und einer Klinke, die mittels einer Rutschkupplung in die Außenverzahnung eingesteuert werden kann.

Ein solcher Gurtaufroller ist aus der DE 201 15 316 U bekannt. Der in dieser Druckschrift gezeigte Gurtaufroller weist einen Elektromotor auf, mittels dem eine vorsorgliche Gurtbandstraffung in einer kritischen Situation erfolgen kann, z.B. bei einer Vollbremsung. Durch die Vorstraffung kann eine eventuell bestehende Gurtlose bereits vor einem Unfall entfernt werden, um das Verletzungsrisiko für Insassen zu minimieren. Außerdem wird die Wirkungsweise eines Gurtstraffers gegenüber einem herkömmlichen System verbessert werden. Bei dem bekannten Gurtaufroller ist eine Rutschkupplung vorgesehen, mittels der die Klinke in die Außenverzahnung eingesteuert werden kann, um die Gurtspule zu drehen. Die Rutschkupplung ist gebildet durch elastische Laschen an einer Kupplungsscheibe, und ein Anschlagelement. Auf die Offenbarung dieser Druckschrift wird hinsichtlich der Erzielung der Vorstraffung ausdrücklich Bezug genommen.

Die Aufgabe der Erfindung besteht darin, einen Gurtaufroller der eingangs genannten Art dahingehend weiterzubilden, daß sich ein kompakterer und kostengünstigerer Aufbau ergibt und ein schnelleres Ansprechen der Kupplung zwischen Elektromotor und Gurtspule erzielt wird.

Zu diesem Zweck ist erfindungsgemäß vorgesehen, daß die Rutschkupplung eine Reibfeder aufweist. Dies führt zu einem kompakten Aufbau, da die Reibfeder sehr platzsparend in andere Funktionsteile des Gurtaufrollers integriert werden kann. Außerdem ergeben sich geringere Herstellungskosten. Schließlich weist die Rutschkupplung kein Spiel auf, so daß sich eine unmittelbares Ansprechen ohne einen Totweg ergibt.

Gemäß einer bevorzugten Ausführungsform ist vorgesehen, daß die Reibfeder eine Ringfeder ist, die in eine Nut an der Kupplungsscheibe eingesetzt ist. Diese Ausführungsform zeichnet sich dadurch aus, daß kein zusätzlicher Bauraum für die Reibfeder beansprucht wird.

Vorteilhafte Ausgestaltungen der Erfindung ergeben sich aus den Unteransprüchen.

Weitere Merkmale und Vorteile der Erfindung ergeben sich aus der folgenden Beschreibung einer bevorzugten Ausführungsform und aus den beigefügten Zeichnungen, auf die Bezug genommen wird. In den Zeichnungen zeigen:
- Figur 1 eine schematische Explosionszeichnung des Gurtaufrollers;
- Figur 2 einen Schnitt durch die Bauteile von Figur 1 im montierten Zustand;
- Figur 3 eine Seitenansicht der mit der Klinke gebildeten Kupplung in einer Ausgangsposition; und
- Figur 4 eine Seitenansicht der mit der Klinke gebildeten Kupplung, wobei die Klinke eingesteuert ist.

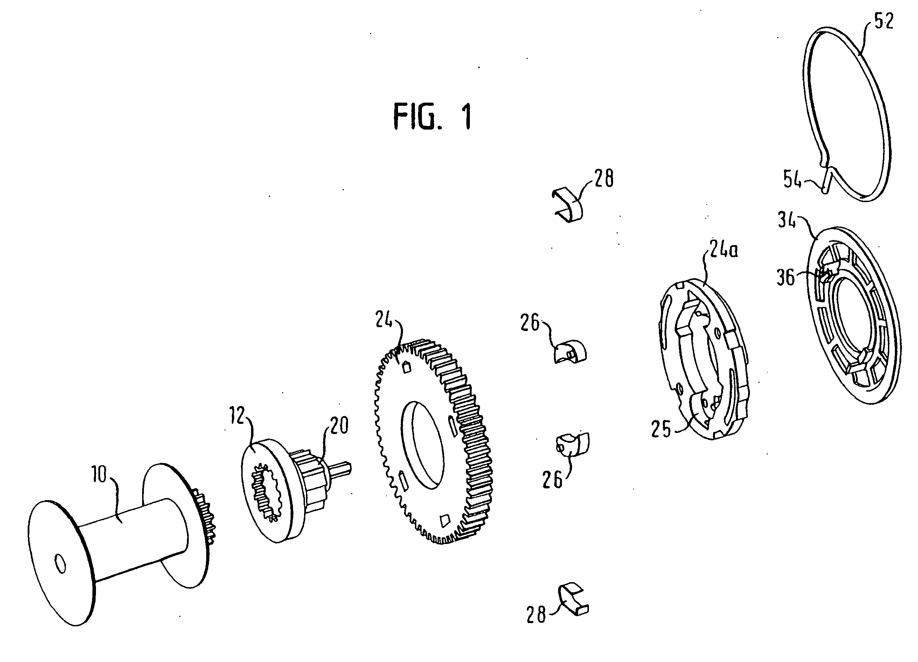

Die Explosionszeichnung in Figur 1 zeigt einen Gurtaufroller für einen Fahrzeugsicherheitsgurt mit einer Gurtspule 10 und einem Gurtspulen-Antriebsteil 12, das drehfest mit der Gurtspule 10 gekoppelt ist und eine Außenverzahnung 20 aufweist. Die Außenverzahnung ist Teil einer Kupplung, mittels der ein Antriebsmoment von einem Rad 24 auf die Gurtspule übertragen werden kann. Das Rad 24 ist mit einem (nicht dargestellten) Elektromotor verbunden (siehe die DE 201 15 316 U).

Das Rad 24 weist ein Einlegeteil 24a auf, in dem mehrere Taschen 25 ausgebildet sind, in denen jeweils eine Klinke 26 angeordnet ist, auf die eine Rückstellfeder 28 wirkt. Jede Klinke wird zusammen mit ihrer Rückstellfeder in einer der Taschen 25 angeordnet, und das Einlegeteil 24a wird am Rad angebracht, beispielsweise verrastet. Die Klinken sind dann in der jeweiligen Tasche schwenkbar aufgenommen.

Axial neben dem Rad 24 ist eine Kupplungsscheibe 34 angeordnet, die mit Steuerlaschen 36 versehen ist, die durch Aussparungen im Einlegeteil 24a in das Rad 24 hineinragen, so daß sie mit den Klinken zusammenwirken können. Auf ihrer vom Rad 24 abgewandten Seite weist die Kupplungsscheibe 34 eine Nut 50 auf, in der eine Reibfeder 52 angeordnet ist. Der Innendruchmesser der Reibfeder 52 im Ausgangszustand ist kleiner als der Außendurchmesser der Nut 50, so daß die Reibfeder mit eine gewissen Vorspannung in der Nut 50 sitzt. Die Reibfeder 52 ist eine Ringfeder, die an einem Ende einen abgebogenen Schenkel 54 aufweist, der drehfest am Rahmen 40 des Gurtaufrollers arretiert ist. Auf diese Weise bildet die Reibfeder 52 zusammen mit der Kupplungsscheibe 34 eine Rutschkupplung, da sie ein Durchrutschen der Kupplungsscheibe 34 ermöglicht, sobald das Haltemoment zwischen Reibfeder und Nut überwunden ist.

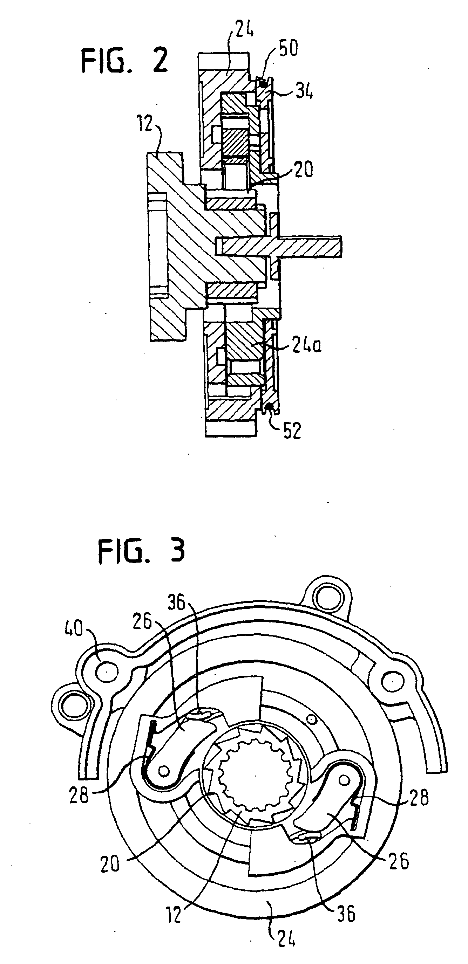

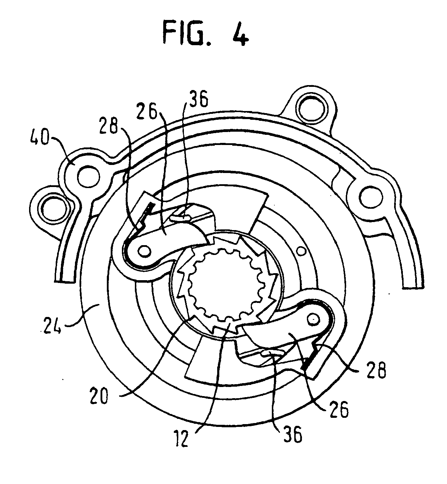

Im folgenden soll anhand der Figuren 3 und 4 die Funktionsweise des Gurtaufrollers dargestellt werden.

In der Ausgangsposition (Figur 3) werden die Klinken 26 durch die Rückstellfedern 28 so zurückgehalten, daß sie nicht in Eingriff mit der Außenverzahnung 20 des Gurtspulen-Antriebsteils 12 sind. In diesem Fall kann sich die Gurtspule 10 frei drehen (Figur 3) und Gurtband von der Gurtspule abgezogen werden.

Wird das Rad 24 vom (nicht dargestellten) Elektromotor in Drehung versetzt, werden die Klinken mitgenommen. Das die Kupplungsscheibe 34 über die Reibfeder 52 festgehalten wird, laufen die Klinken 26 auf die Steuerlaschen 36 auf und werden in die Verzahnung 20 eingesteuert (Figur 4). Nun ist das Rad 24 mit der Gurtspule 10 gekoppelt, und es kann eine Vorstraffung durchgeführt werden. Dabei wird die Kupplungsscheibe 34 über die Steuerlaschen 36 mitgenommen, was aufgrund der Rutschkupplung zwischen der Kupplungsscheibe und dem Rahmen des Gurtaufrollers problemlos möglich ist.

Zum Lösen der Verbindung zwischen dem Rad 24 und der Gurtspule 10 wird das Rad 24 in der entgegengesetzten Richtung gedreht, so daß die Kupplungsscheibe 34 gegenüber dem Rad zurückbleibt und die Steuerlaschen 36 es den Klinken ermöglichen, unter der Wirkung der Rückstellfedern 28 wieder in ihre Ausgangsposition zu gelangen.

## Patentansprüche

1. Gurtaufroller für einen Fahrzeugsicherheitsgurt, mit einem Rahmen (40), einem Gurtspulen-Antriebsteil (12), das drehbar am Rahmen angeordnet ist und mit einer Gurtspule verbunden sein kann, wobei das Gurtspulen-Antriebsteil mit einer Außenverzahnung (20) versehen ist, und einer Klinke (26), die mittels einer Rutschkupplung in die Außenverzahnung eingesteuert werden kann, **dadurch gekennzeichnet, daß** die Rutschkupplung eine Reibfeder (52) aufweist.

2. Gurtaufroller nach Anspruch 1, **dadurch gekennzeichnet, daß** die Klinke (26) in einem Rad (24) gelagert ist, daß eine Kupplungsscheibe (34) vorgesehen ist und daß die Rutschkupplung eine Relativdrehung zwischen dem Rad (24) und der Kupplungsscheibe (34) hervorrufen kann.

3. Gurtaufroller nach Anspruch 2, **dadurch gekennzeichnet, daß** die Reibfeder (52) an der Kupplungsscheibe (34) angebracht ist.

4. Gurtaufroller nach Anspruch 3, **dadurch gekennzeichnet, daß** die Reibfeder (52) eine Ringfeder ist, die in eine Nut (50) an der Kupplungsscheibe (34) eingesetzt ist.

5. Gurtaufroller nach Anspruch 4, **dadurch gekennzeichnet, daß** der Außendurchmesser der Reibfeder (52) im Ausgangszustand kleiner ist als der Innendurchmesser der Nut (50).

6. Gurtaufroller nach Anspruch 4 oder Anspruch 5, **dadurch gekennzeichnet, daß** die Reibfeder (52) einen abgebogenen Schenkel (54) aufweist, der am Rahmen (40) arretiert ist.

## Claims

1. A belt retractor for a vehicle safety belt, comprising a frame (40), a belt spool drive part (12) which is rotatably arranged on the frame and can be connected with a belt spool, the belt spool drive part being provided with outer teeth (20), and a catch (26) which can be caused to engage into the outer teeth by means of a slip coupling, **characterized in that** the slip coupling has a friction spring (52).

2. The belt retractor according to Claim 1, **characterized in that** the catch (26) is mounted in a wheel (24), that a coupling disc (34) is provided, and that the slip coupling can bring about a relative rotation between the wheel (24) and the coupling disc (34).

3. The belt retractor according to Claim 2, **characterized in that** the friction spring (52) is mounted to the coupling disc (34).

4. The belt retractor according to Claim 3, **characterized in that** the friction spring (52) is an annular spring which is inserted in a groove (50) in the coupling disc (34).

5. The belt retractor according to Claim 4, **characterized in that** the external diameter of the friction spring (52) in the initial state is smaller than the internal diameter of the groove (50).

6. The belt retractor according to Claim 4 or Claim 5, **characterized in that** the friction spring (52) has a bent arm (54) which is arrested at the frame (40).

## Revendications

1. Enrouleur de ceinture pour une ceinture de sécurité de véhicule, comportant un cadre (40), une partie d'entraînement de bobine de ceinture (12), qui est agencée rotative sur le cadre et qui peut être reliée à une bobine de ceinture, la partie d'entraînement de bobine de ceinture étant pourvue d'une denture extérieure (20), et un cliquet (26) qui peut être introduit dans la denture extérieure au moyen d'un accouplement à glissement, **caractérisé en ce que** l'accouplement à glissement présente un ressort de friction (52).

2. Enrouleur de ceinture selon la revendication 1, **caractérisé en ce que** le cliquet (26) est logé dans une roue (24), **en ce qu'**il est prévu un disque d'accouplement (34), et **en ce que** l'accouplement à glissement peut provoquer une rotation relative entre la roue (24) et le disque d'accouplement (34).

3. Enrouleur de ceinture selon la revendication 2, **caractérisé en ce que** le ressort de friction (52) est monté sur le disque d'accouplement (34).

4. Enrouleur de ceinture selon la revendication 3, **caractérisé en ce que** le ressort de friction (52) est un ressort-bague qui est inséré dans une gorge (50) sur le disque d'accouplement (34).

5. Enrouleur de ceinture selon la revendication 4, **caractérisé en ce que** le diamètre extérieur du ressort de friction (52) à l'état initial est inférieur au diamètre intérieur de la gorge (50).

6. Enrouleur de ceinture selon la revendication 4 ou la revendication 5, **caractérisé en ce que** le ressort de friction (52) présente une branche (54) repliée qui est arrêtée sur le cadre (40).
